# EUROPEAN PATENT SPECIFICATION

(11) **EP 2 493 167 B1**
(45) Date of publication and mention of the grant of the patent: **01.07.2015**
(21) Application number: 11156254.2
(22) Date of filing: 28.02.2011
(51) Int. Cl.: H04M 9/08

(54) **Adaptive delay compensation for acoustic echo cancellation**
Adaptiver Verzögerungsausgleich für den akustischen Echoabbruch
Compensation adaptative de délai pour annulation d'écho acoustique

(43) Date of publication of application: 29.08.2012
(73) Proprietor: 2236008 Ontario Inc., Waterloo, ON N2K 0A7 (CA)
(72) Inventor: Mason, Steven G., Vancouver British Columbia V6B 2K4 (CA)
(74) Representative: Greenaway, Martin William

(56) References cited:
- EP-A1- 1 715 669
- WO-A2-2004/021679
- US-A1- 2004 037 432
- US-A1- 2009 252 343

## Description

### BACKGROUND OF THE INVENTION

### 1. Technical Field.

This application relates to communication, and more specifically to, acoustic echo cancellation.

### 2. Related Art.

Acoustic echo cancellation systems may be calibrated for fixed time delays between a transmission and a reception of a signal. As equipment changes, the timing between the transmission and reception of the signal may change, which may cause some echo cancellation systems to become uncalibrated. Uncalibrated systems may cause audio signals to become distorted often resulting in poor audio quality.

Distortion may be noticeable in mobile devices. When used in a vehicle or with a docking station, the output of the mobile device may be redirected to devices that introduce additional buffering, audio processing, and conversions. The latency of these processes can cause significant time delays. Some acoustic echo cancellation systems do not adapt or even detect such delays, and rather than removing repetitive echo and reverberations, the systems reduce intelligibility and audio quality

US 2009/252343 A1 describes an audio system having a microphone, a speaker coupled to a source of audio output, and an echo canceller coupled to the speaker and microphone, wherein the latency between the source of audio output and the speaker may be compensated in echo cancellation performed by the echo canceller.

WO 2004/021679 A2 describes an echo detector that correlates between an incoming signal and an echo signal to determine echo delay.

Aspects of the invention are defined in the appended independent claims.

### SUMMARY

An acoustic echo cancellation system buffers remote side signals to one or more storage areas. A delay controller filters and delays the remote side signals to correlate the remote side signals to local side signals. An acoustic echo cancellation core pulls the remote side signals from the buffer through a delay controller. A delay estimator continuously or intermittently generates an estimate of a delay between the buffered remote side signals and the local side signals. The delay estimator renders a confidence level that indicates a degree of likelihood for each potential match between delayed remote side signals and the local side signals. The acoustic echo cancellation core substantially cancels a portion of the echo or reverberation within the local side signals based on the estimate of the delay and the confidence level.

Other systems, methods, features and advantages of the invention will be, or will become, apparent to one with skill in the art upon examination of the following figures and detailed description. It is intended that all such additional systems, methods, features and advantages be included within this description, be within the scope of the invention, and be protected by the following claims.

### BRIEF DESCRIPTION OF THE DRAWINGS

The inventions can be better understood with reference to the following drawings and descriptions. The components in the figures are not necessarily to scale, emphasis instead being placed upon illustrating the principles of the inventions. Moreover, in the figures, like referenced numerals designate corresponding parts throughout the different views.

Figure 1 is an acoustic echo cancellation system with adaptive delay.

Figure 2 is an alternative acoustic echo cancellation system with adaptive delay.

Figure 3 is a second alternative acoustic echo cancellation system with adaptive delay.

Figure 4 is a third alternative acoustic echo cancellation system with adaptive delay.

Figure 5 is an acoustic echo cancellation process.

Figure 6 is an alternative acoustic echo cancellation process.

Figure 7 is a second alternative acoustic echo cancellation process.

Figure 8 is a third alternative acoustic echo cancellation process.

Figure 9 is a vehicle interfacing or integrating (e.g., a unitary part of) the acoustic echo cancellation systems of figures 1 ― 4 and/or the acoustic echo cancellation processes of figures 6 ― 8.

Figure 10 is a wireless device / wireless architecture interfacing or integrating (e.g., a unitary part of) the acoustic echo cancellation systems of figures 1 ― 4 and/or the acoustic echo cancellation processes of figures 6 ― 8.

Figure 11 shows a plurality of alternative acoustic echo cancellation systems that execute program code and data structures written to a computer usable medium or a non-transitory medium.

### DETAILED DESCRIPTION OF THE PREFERRED EMBODIMENTS

A system and process enhances the intelligibility between an input and an output in a hands-free, landline, or other communication system. The hardware and software of the system and process may capture and copy remote side signals that are converted into audible sound. The direct sound delivered through the acoustic echo path, its reverberations, and its alterations (e.g., the secondary reflections) may be identified and substantially dampened or attenuated. The system may effectively model the audible sound, its receiving device, and acoustical properties of the receiving environment to efficiently cancel echo, and in some applications, reverberation. The systems and processes anticipate remote side signals (and their alterations) that are likely to re-enter a transmission path by detecting the delay between the remote side signals and the local side signals. The system dynamically delays copies of the remote side signals. The dynamic delay may change when confidence levels are reached, when a temporal heuristic renders an adjustment, when a predetermined probability is achieved, and/or when one or more empirical events or states occur. By processing the remote side signals, the system may converge to render a significant dampening or attenuation of an echo or reverberation in a short period of time (e.g., less than hundreds of milliseconds).

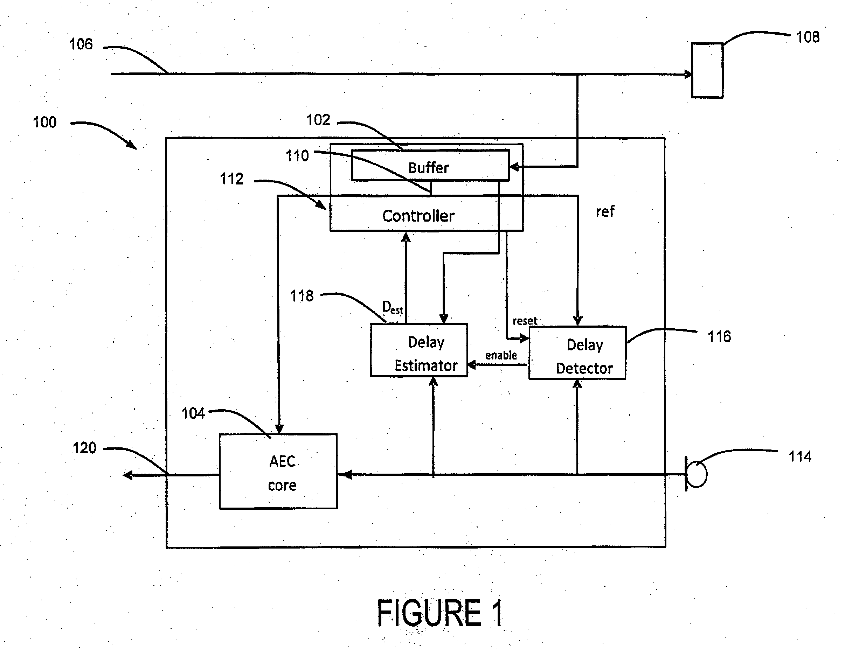

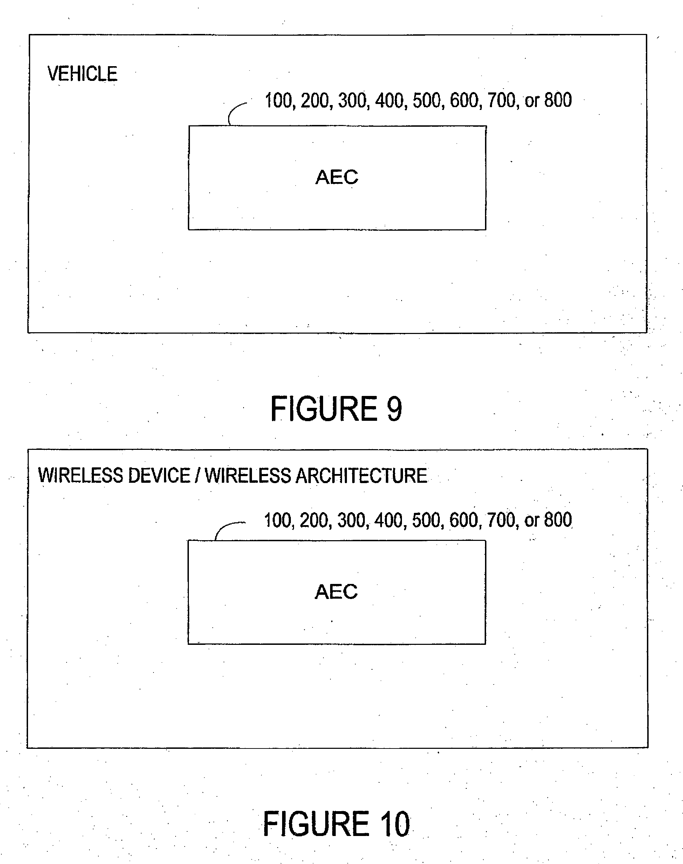

Figure 1 is an acoustic echo cancellation system 100 with an adaptive delay. The system may be part of a video or teleconferencing system, a vehicle (e.g., figure 9) or comprise a unitary part of a wireless device and/or wireless architecture (e.g., figure 10). The system 100 may include a buffer 102 such as a sequential buffer, a circular buffer, a ping pong buffer, or a double buffer, for example, that provides variable delay of the remote side signal to an acoustic echo cancellation element or core 104. Logically distinct portions of the buffer 102 (e.g., partitions) may function as physically separate nonvolatile memory units that may comprise a unitary or parallel structure. The buffer 102 may alternatively write the remote side signals sampled from the transmission path 106 to one or more storage areas and then read and transmit data stored in the other storages areas to the acoustic echo cancellation element or core 104 after a dynamic delay. Rather than holding information coming and going to particular input and output devices based on memory write cycles that may introduce more latency, some buffers 102 may provide a substantially continuous input of remote side signals to the acoustic echo cancellation core 104 at an established delay The remote side signals are converted into an aural or audible sound by transducer 108 or loudspeaker.

The acoustic echo cancellation core 104 may pull the remote side signal from a buffer tap 110 associated with the delay controller 112. The delay controller 112 filters and delays the remote side signals to positively resemble or correlate to the local side signal that is received at a sensor or input 114. In figure 1, the input 114 may comprise a transducer or device that coverts sound into analog or digital data such as a microphone. When there is a high similarity, co-relation, correlation or coherence between the resultant (e.g., filtered and delayed) remote side signal and the local side signal, the acoustic echo cancellation core 104 substantially cancels the echo or reverberation rendering a processed signal 120 that represents the sound present in a room or an environment with substantially little direct echo or reverberated sound from the local side speaker. The attenuation or dampening may occur through various techniques or elements such as through a subtractor, adaptive filter, frequency shifter, etc. The suppression may occur in one or more formats (e.g., analog or digital), within one or more processing domains such as the time domain, the frequency domain, the wavelet domain, etc. In some applications, the remote side and local side signals are converted from an analog to digital format and converted from the temporal domain to the frequency domain, before the local side and the remote side signals are converted back to their temporal or origin processing domains and formats.

When the local side and remote side signals are not similar or different such as when the signals lack a spectral coherence or temporal coherence, for example, the difference between the signals may be detected by the delay detector 116. The delay detector 116 may automatically identify and record in memory differences or coherent changes between the buffered remote side signal and the local side signal. The delay detector 116 compares the filtered reference signal to the input signal looking for evidence that that the signals are different, or in some applications, significantly different in real-time or near real time.

In some systems, the delay detection is mirrored or duplicated in the acoustic echo cancellation core 104. In these alternative systems, any changes or significant differences between the buffered remote side signal and the local side signal, such as differences in spectral coherence, for example, is also detected by the acoustic echo cancellation core 104. So if the delay detector 116 fails or becomes corrupted, the acoustic echo cancellation core 104 may identify and record the signal changes in memory. The ability of these alternative acoustic echo cancellation systems to respond to failures or catastrophic events or faults ensures that substantially no communication or perceptual quality is lost for failure to detect differences, such as spectral or temporal coherence differences. The fault tolerance of these alternative acoustic echo cancellation systems, allows the system to continue operation while a fault recovery process (e.g., the delay detector 116 is reset, shut down, etc.) or an error control is initiated (e.g., initiating an error correction, informing a user or entity of an error code, etc.).

When a lack of similarity is detected such as differences in spectral coherence for a predetermined period of time, the delay estimator 118 may be enabled. In figure 1, the delay estimator 118 is enabled by the delay detector 116; in other systems, the delay estimator 118 is enabled by the acoustic echo cancellation core 104 exclusively, in combination with the delay estimator 118, or continuously generates estimates without an enabling signal (e.g., some systems do not include a delay detector 116). Once activated, the delay estimator 118 continually generates an estimate of the current delay "Dest" between the stored remote side signal shown as the "ref" signal in figures 1-4 and the unaltered local side input signal. The delay estimator 118 may compare the entire buffered remote side signal (or a portion thereof) to the unaltered local side signal received at the sensor or input 114. The similarity, co-relation, and/or correlation between the signals is measured and a delay estimate rendered and stored in memory. In some systems 100, the delay estimation occurs through a correlation in the time domain. In other systems, the delay is estimated by other measures such as a time series amplitude matching, etc. that may be processed in the temporal or other operating domains (e.g., a frequency based correlation, etc.).

Once a high confidence level is reached or a highest confidence threshold is achieved, or a temporal heuristic indicates little variability, or a predetermined probability of a stable estimate is achieved and/or an empirical stability is attained, the delay estimator 118 adjusts the latency of the buffer tap 110 associated with the delay controller 112. In some systems 100, the confidence level indicates a degree of confidence or a discrete value (e.g., a binary value) for each potential match between delayed remote side signals and the local side signals. In some systems the confidence level is the degree of certainty that a prediction is accurate or that a failure rate is not exceeded. In some systems the confidence level is the probability that a delay value lies within a predetermined or programmed interval.

When the acoustic echo cancellation core 104 receives the newly delayed remote side signal, the delay controller 112 may reset or lock out the delay detector 116, which in turn may disable the delay estimator 118 in some systems. In these systems the delay detector 116 may remain in a "lockout" state for a variable period. The delay detector 116 may be locked out until the acoustic echo cancellation core 104 models the acoustic space or audio path, the local side speaker, and the sensor or input 114 or when the acoustic echo cancellation core 104 converges to a cancellation level at a certain rate or with in a predetermined period of time (e.g., 25 dB of cancellation in around 25 ms). In some systems, the delay detector 116 may remain locked out for a predetermined period of time that may be measured by an internal or external timer or counter. In these systems, the fixed lockout period may ensure that the delay detector 116 does not latch into a continuous lockout state. Some systems may not include a delay detector 116. In these systems the delay estimator 118 may operate continuously rather than in a gated configuration.

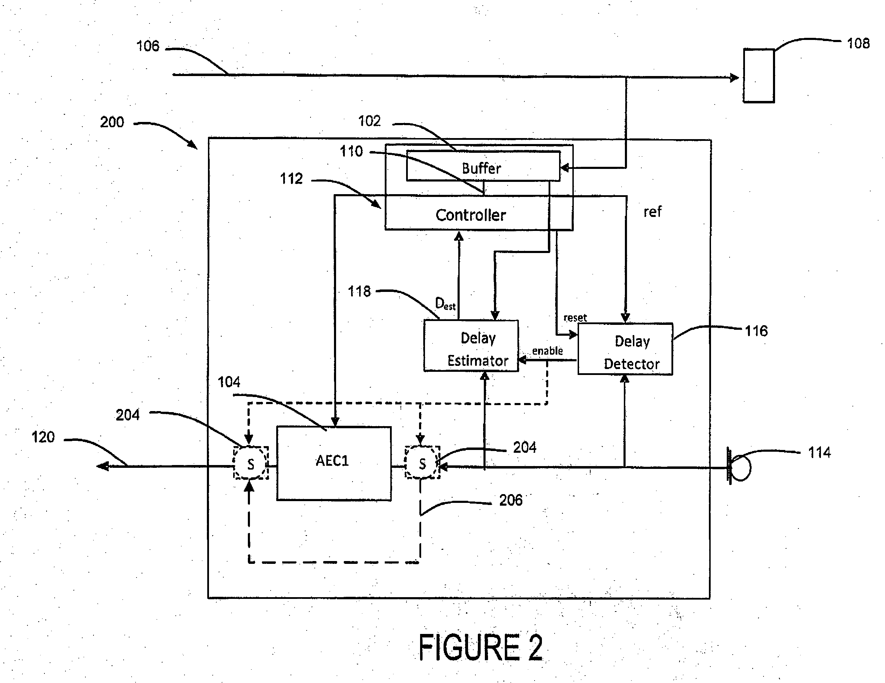

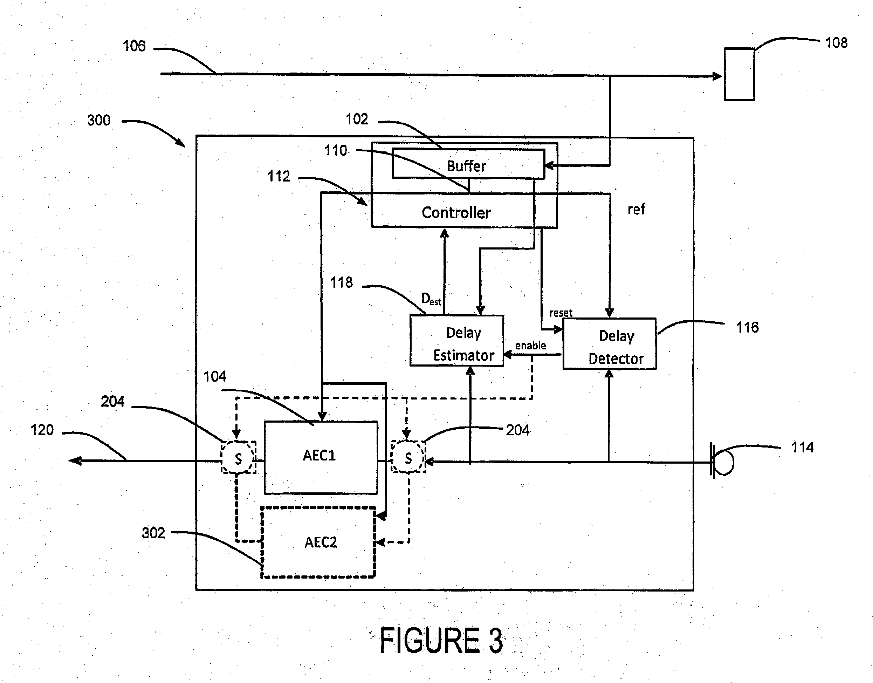

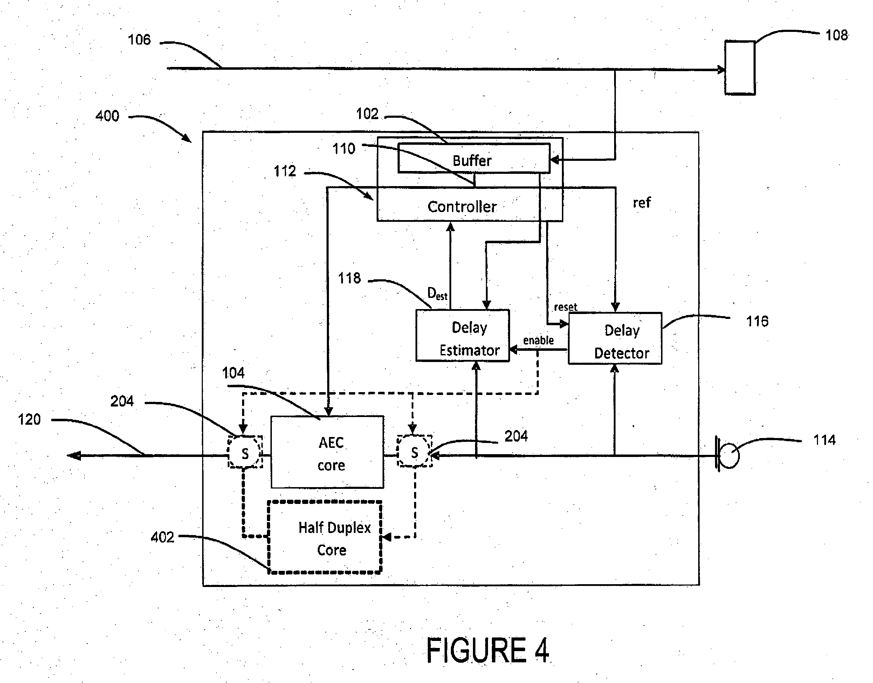

As the acoustic echo cancellation core 104 determines the nature of the filtering to be applied to the remote side signal such that it resembles the local side signal, some acoustic echo cancellation systems 200 may disable the acoustic echo cancellation core 104 while the delay detector 116 is in a lockout state. In some acoustic echo cancellation systems such as the system shown in figure 2, control devices 204 may pass the local side signal as if there were no intermediate processing by routing the local side signal through a signal path 206 that bypasses the acoustic echo cancellation core 104. The control line (e.g., enable line) of the delay detector 116 controls the routing and operation of signal path 206 through electrical or electromechanical switches 204. In figure 3, the control line (e.g., enable line) of the delay detector 116 enables the routing of the input through one or more secondary acoustic echo cancellation cores 302 that may comprise one or more echo suppressors, echo cancellers, or in some applications, a combination of echo suppressors and echo cancellers coupled in series (not shown) or parallel (shown in figure 3) with the acoustic echo cancellation core 104. The nature of the filtering to be applied by the secondary acoustic echo cancellation cores 302 of the alternative echo cancellation system 300 may be such that the remote side signals may resemble the local side signals by filtering and applying a fixed delay to the remote side signals. In the case of echo suppressors, echo and reverberation may be suppressed by allowing signals to flow sequentially in a local or a remote direction, but not simultaneously in time. In figure 4, an alternative secondary acoustic echo cancellation core 402 may carry information from the local side speaker when a remote side speaker is not talking through a half-duplex core 402. Like the echo cancellation systems 200 shown in figure 2, echo cancellation systems 300 and 400 shown in figures 3 and 4 may enable the secondary acoustic echo cancellation cores 302 and 402 while the delay detector 116 is in a lockout state, for a predetermined time period, or when a failure or fault condition is detected. A fault condition may occur when the acoustic echo cancellation core 104 fails. The fault tolerance of these alternative acoustic echo cancellation systems 200, 300, and 400 improves the perceptual quality of a call (or communication) and increases the capacity of the communication system by preventing echo and reverberation from traveling across a communication network.

The calibration of the acoustic echo cancellation systems 100, 200, 300, and 400 with the adaptive delay may vary by application and available resources. When the acoustic echo cancellation systems 100, 200, 300, and 400 require training with minimal Central Processing Unit (CPU) cycles, the delay detector 116 may aggressively compare the filtered reference signal to the input signal at the beginning of a call, and execute fewer comparisons during the duration of the call or after a predetermined or programmed period. In some phone, video conferencing, mobile communication and/or vehicle applications, the acoustic echo cancellation systems 100, 200, 300, and 400 may self-calibrate when a phone rings or a perceptible alert of an incoming communication is received. Once calibrated, the acoustic echo cancellation systems 100, 200, 300, and 400 may store the last calculated delay and readjust or confirm the delay when the acoustic echo cancellation systems 100, 200, 300, and 400 are reactivated. Alternatively, the acoustic echo cancellation systems 100, 200, 300, and 400 may initiate the filtering and delay at a predetermined configurations and values and readjust the parameters or confirm the parameters as the system operates.

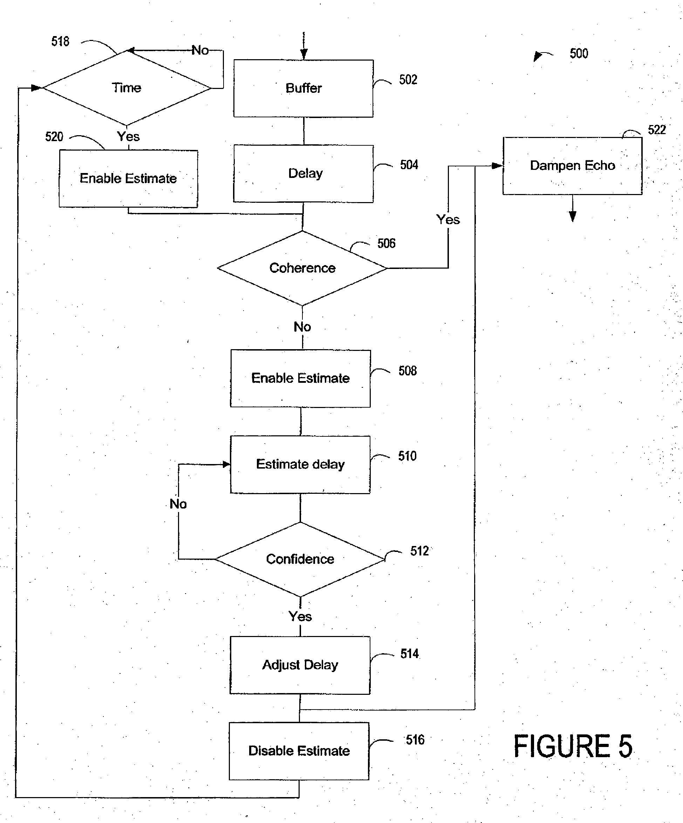

In figure 5 a full audio or partial audio (e.g., 300 Hz ― 3 kHz) bandwidth is processed to minimize or exclude echo, reverberations, and its alterations (e.g., the secondary reflections). The process 500 alternatively writes the remote side signals sampled from a transmission path to one or more storage areas in a buffer or database and then reads the data stored in the other storages areas or databases at 502. An acoustic echo cancellation process may pull the remote side signal through a controller that filters and delays the remote side signal to positively resemble or correlate to a local side signal at 504.

When there is a high similarity or minimal difference between the resultant (e.g., filtered and delayed) remote side signal and the local side signal at 506, the acoustic echo cancellation process substantially cancels the echo or reverberation rendering a processed signal that represents the sound present in the environment with substantially little direct echo or reverberated sound from the local side speaker at 522. The attenuation or dampening may occur through various processes such as through a subtracting process, an adaptive filtering process, a frequency shifting process, etc. The suppression may occur in one or more formats (e.g., analog or digital), within one or more processing domains such as the time domain, the frequency domain, the wavelet domain, etc.

When the local side and remote side signals are not similar or lack a spectral coherence or temporal coherence, for example, the difference between the signals may be detected. The detection process may automatically identify and record the differences in memory (or a local or distributed database) between the buffered remote side signal and the local side signal. The detection process compares the filtered reference signal to an input signal looking for evidence that that the signals are different, or in some applications coherently different in real-time or near real time.

In some systems, the delay detection is mirrored or duplicated in a secondary detection process. In these alternative processes, any changes or significant differences between the stored remote side signal and the local side signal, such as differences in spectral coherence is also detected by the secondary detection process. So if a first detection process fails or becomes corrupted, the second detection process may identify and record the changes in a memory or a database. The ability of these alternative acoustic echo cancellation detection processes to respond to failures or catastrophic events or faults ensures that substantially no communication or perceptual quality is lost for failure to detect differences, such as spectral or temporal coherence differences. The fault tolerance of these processes, allows the overall process to continue operation while a fault recovery process or an error control process is initiated (e.g., initiating an error correction, informing a user or entity of an error code, etc.).

When a lack of a strong similarity is detected for a predetermined period, an estimation process may be enabled at 508. Once enabled, the delay estimation process continually generates an estimate of the current delay between the stored remote side signal and the unaltered local side input signal. The delay estimation process 510 may compare the entire buffered remote side signal (or a portion thereof in alternative systems) to the unaltered local side signal. The similarity or co-relation between the signals is measured and a delay estimate rendered and stored in memory. In some processes, the delay estimation occurs through a coherence or correlation in the time domain. In other processes, the delay is estimated by other measuring processes such as a time series amplitude matching, etc. that may be processed in the temporal or other operating domains (e.g., a frequency based correlation, etc.).

Once a high confidence level or confidence threshold value is reached, or a temporal heuristic indicates little variability, or a predetermined probability of a stable estimate is achieved and/or an empirical stability is attained at 512, a controller adjusts the delay at 514. When the acoustic echo cancellation process receives the newly delayed remote side signal, the process may temporarily reset or lock out additional delay detections which in turn may disable additional delay estimates 516. The delay detection process may remain in a "lockout" state for a variable period of time. The delay detection process may be locked out until the acoustic echo cancellation process models the acoustic space or audio path, the local side speaker, and the sensor or input. In some processes, the delay detection process may remain locked out for a predetermined period of time at 518. In these processes, the fixed lockout period may ensure that the delay detection process does not latch into a continuous lockout state at 520. In some other processes, 516-520 are not practiced. In these processes, the delay estimation process 510 may operate continuously without entering a lockout state.

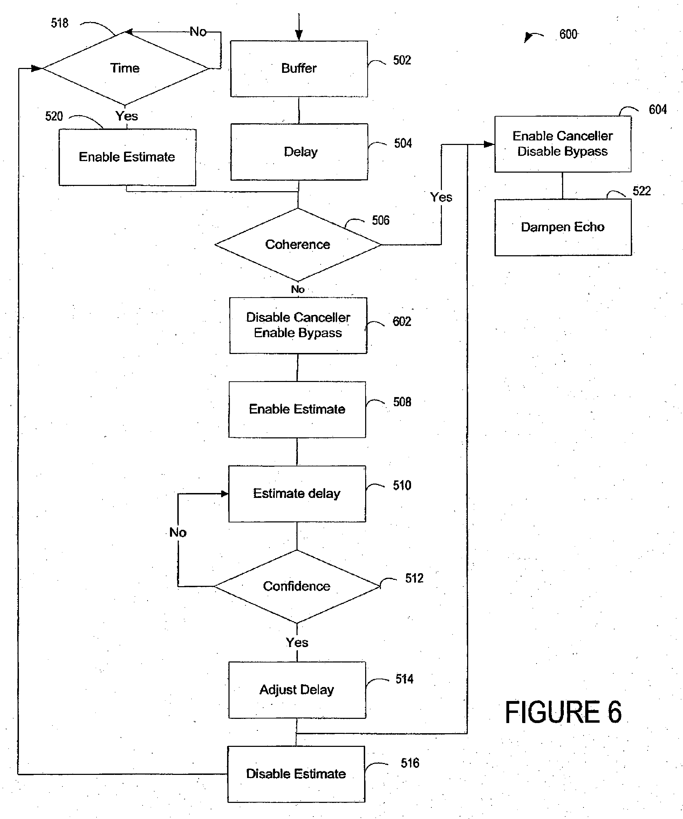

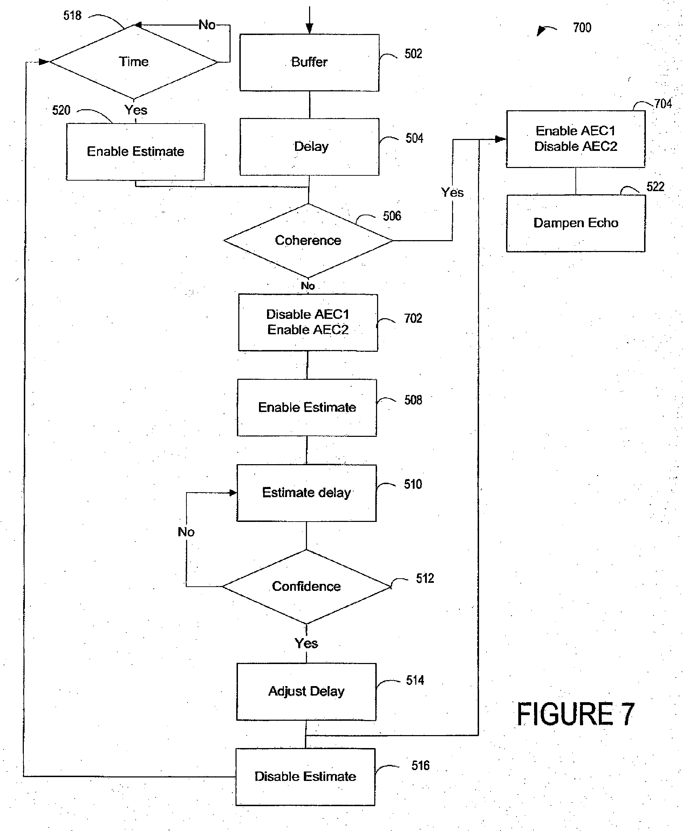

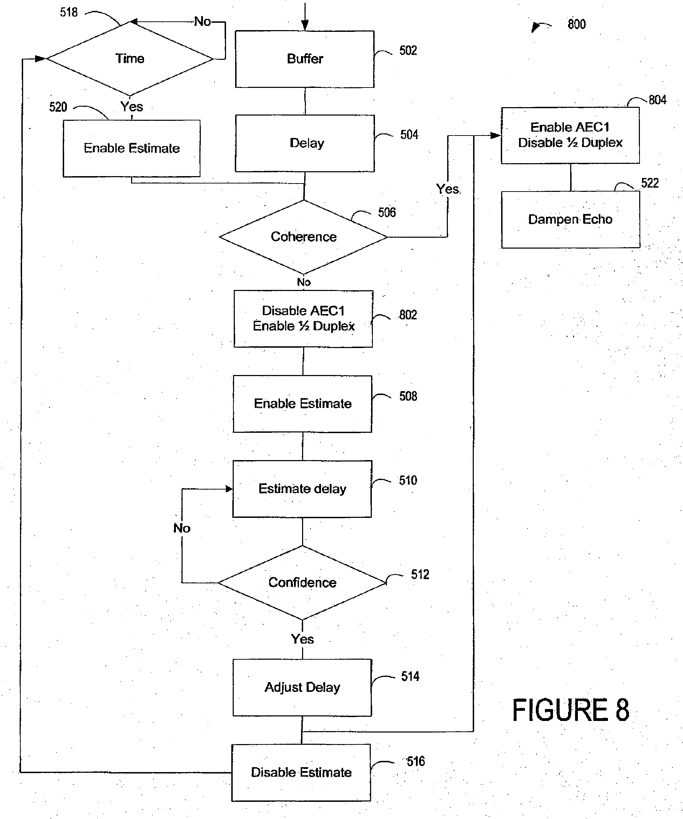

As the acoustic echo cancellation process determines the nature of the filtering to be applied to the remote side signal such that it resembles the local side signal, some acoustic echo cancellation processes may disable acoustic echo cancellation while the delay detection process is in a lockout state. In some acoustic echo cancellation processes such as the process shown in figure 6, a control process may pass the local side signal as if there were no intermediate processing by routing the local side signal through a signal path that bypasses acoustic echo cancellation at 602. The delay detection process 600 may control the routing that is enabled at 604 after the delay is adjusted. In figure 7, a delay detection process 700 enables the routing of the input through one or more secondary acoustic echo cancellation processes at 702 that may comprise one or more echo suppressors, echo cancellers, or in some applications, a combination of echo suppressors and echo cancellers coupled in series or parallel. The nature of the filtering to be applied by the secondary acoustic echo cancellation process (AEC2) of the alternative echo cancellation process 700 may be such that the remote side signals may resemble the local side signal by filtering and applying a fixed delay to the remote side signals. In the case of echo suppressors, echo and reverberation may be suppressed by allowing signals to flow sequentially in a local or a remote direction, but not simultaneously in time. Like the process shown in figure 6, the secondary acoustic echo cancellation processes of figure 7 may be disabled after the delay is adjusted or confirmed at 704. In figure 8, an alternative secondary acoustic echo cancellation process that enables a half-duplex operation 802 may carry information from the local side speaker when a remote side speaker is not talking. Like the echo cancellation process 500 shown in figure 5, echo cancellation processes 600 and 700 shown in figures 6 and 7, respectively, may enable the secondary acoustic echo cancellation cores 302 and 402 while the delay detection process is in a lockout state, for a predetermined time period, or when a failure or fault condition is detected. A fault condition may occur when one or more of the acoustic echo cancellation processes fails. The fault tolerance of these alternative acoustic echo cancellation processes 500, 600, and 700 improve the perceptual quality of a call (or communication) and increases the capacity of the communication system by preventing echo and reverberation from traveling across a communication network.

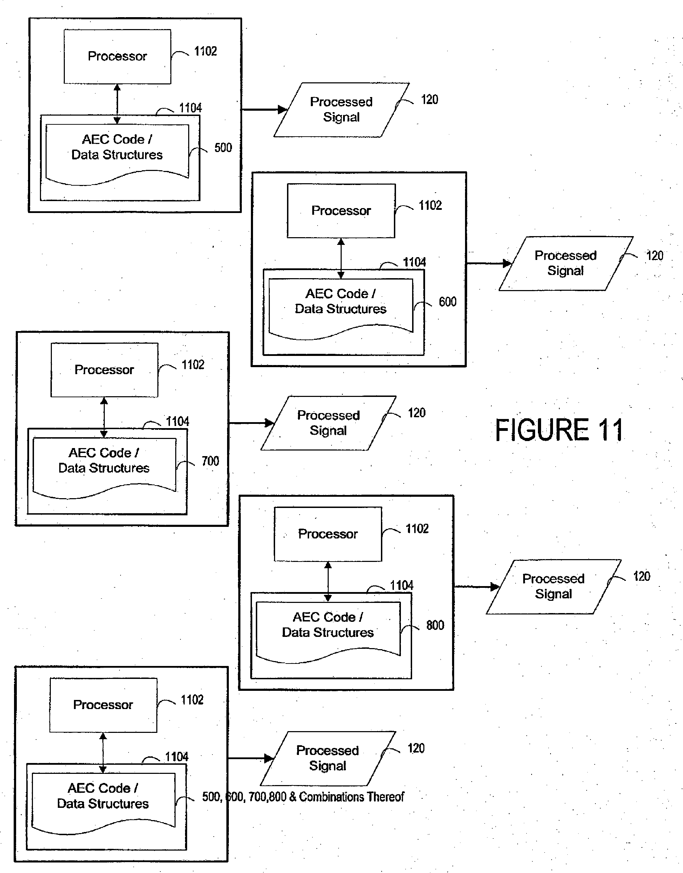

The systems, methods, and descriptions provided herein may program one or more signal processors 1102 (shown in figure 11 executing different program code) or may be encoded in a signal bearing storage medium, a computer-readable medium, or may comprise logic 500-800 stored in a memory or database that may be accessible through an interface and is executable by one or more processors such as slave processors. Some signal-bearing storage medium or computer-readable medium comprise a memory that is unitary or separate (e.g., local or remote) from a device, programmed within a device, such as one or more integrated circuits, or retained in memory or database and/or processed by a controller or a computer. If the descriptions or methods are performed by program code or software, the program code, software, or logic 500-800 may reside in an electronic or optical memory or databases resident to or interfaced to one or more processors, devices, or controllers that may support a tangible or visual communication interface (e.g., to a display), wireless communication interface, or a wireless system.

The local or distributed databases or memory 1104 may retain an ordered listing of executable instructions in a processor, device, or controller accessible medium for implementing logical functions. A logical function may be implemented through digital circuitry, through source code, or through analog circuitry. The software or logic 500-800 may be embodied in any computer-readable medium, signal-bearing medium, or other non-transitory medium for use by, or in connection with, an instruction executable system, apparatus, and device, resident to system that may maintain persistent or non-persistent connections. Such a system may include a computer system, a processor-based system, or another system that includes an input and output interface that may communicate with a publicly accessible or privately accessible distributed network through a wireless or tangible communication bus through a public and/or proprietary protocol.

A "computer-readable storage medium," "machine-readable medium," "propagated-signal" medium, and/or "signal-bearing medium" 1104 may comprise a medium (e.g., a non-transitory medium) that stores, communicates, propagates, or transports software or data for use by or in connection with an instruction executable system, apparatus, or device. The machine-readable medium may selectively be, but not limited to, an electronic, magnetic, optical, electromagnetic, infrared, or semiconductor system, apparatus, device, or propagation medium. A non-exhaustive list of examples of a machine-readable medium would include: an electrical connection having one or more wires, a portable magnetic or optical disk, a volatile memory, such as a Random Access Memory (RAM), a Read-Only Memory (ROM), an Erasable Programmable Read-Only Memory (EPROM or Flash memory), or an optical fiber. A machine-readable medium may also include a tangible medium, as the software may be electronically stored as an image or in another format (e.g., through an optical scan), then compiled, and/or interpreted or otherwise processed. The processed medium may then be stored in a computer and/or machine memory.

While various embodiments of the invention have been described, it will be apparent to those of ordinary skill in the art that many more embodiments and implementations are possible within the scope of the invention. Accordingly, the invention is not to be restricted except in light of the attached claims and their equivalents.

## Claims

1. An acoustic echo cancellation system (100), (200), (300), or (400) comprising:
a buffer (102) that writes remote side signals to one or more storage areas;
a delay controller (112) that filters and delays the remote side signals to correlate the remote side signals to local side signals;
an acoustic echo cancellation core (104) or (302) that pulls the remote side signals from the buffer (102) through the delay controller (112); and
a delay estimator (118) that continuously generates an estimate of a delay between the stored remote side signals and the local side signals and arranged to render a confidence level associated with the continuously generated estimates, where the confidence level associated with an estimate of a delay indicates a degree of stability of that estimate, where the delay estimator (118) continuously generates the estimates and renders the associated confidence level until the rendered confidence level exceeds a predetermined value, and where the confidence level comprises a correlation measurement, a discrete value, or a temporal heuristic;
where, when the confidence level exceeds a predetermined value the acoustic echo cancellation core (104) or (302) substantially cancels a portion of an echo or reverberation within the local side signals based on the estimate of the delay associated with the rendered confidence level that exceeds the predetermined level.

2. The acoustic echo cancellation system (100), (200), (300), or (400) of claim 1 further comprising a delay detector (116) that automatically identifies and records in a memory signal differences between the remote side signals and the local side signals.

3. The acoustic echo cancellation system (100), (200), (300), or (400) of claim 2 where the delay detector (116) identifies coherence differences in real-time, or where the delay estimator (118) is enabled by the delay detector (116).

4. The acoustic echo cancellation system (100), (200), (300), or (400) of claim 2 where the acoustic echo cancellation core (104) or (302) identifies and records the signal differences between the remote side signals and the local side signals when the remote side signals and the local side signals lack a spectral coherence to provide a fault tolerance.

5. The acoustic echo cancellation system (100), (200), (300), or (400) of claim 2 further comprising:
bypass components (204) and (206) or (204) and (302) or (204) and (402) that allow the local side signals to bypass the acoustic echo cancellation core (104) or (302) while the acoustic echo cancellation core (104) or (302) models an acoustic space, a local side speaker, and an input device; and
where the delay controller (112) resets the delay detector (116) until the acoustic echo cancellation core (104) or (302) models the acoustic space, the local side speaker, and the input device, or further comprising:
bypass components (204) and (206) or (204) and (302) or (204) and (402) that allow the local side signals to bypass the acoustic echo cancellation core (104) or (302) while the acoustic echo cancellation core 104 or 302 converges to a cancellation level; and
where the delay controller (112) resets the delay detector (116) until the acoustic echo cancellation core (104) or (302) converges to a cancellation level.

6. The acoustic echo cancellation system (100), (200), (300), or (400) of claim 1 further comprising bypass components (204) and (206) that allow the local side signals to bypass the acoustic echo cancellation core (104) or (302) while the acoustic echo cancellation core (104) or (302) models an acoustic space, a local side speaker, and an input device.

7. The acoustic echo cancellation system (100), (200), (300), or (400) of claim 1 where the delay estimator (118) compares entire buffered remote side signals to unaltered local side signals in a time domain, or where the delay estimator (118) is configured to remain in a locked out state until the acoustic echo cancellation core (104) or (302) models an acoustic space, a local side speaker, and an input device, or where the delay estimator (118) is configured to remain in a locked out state for a predetermined period while the acoustic echo cancellation core (104) or (302) models an acoustic space, a local side speaker and an input device.

8. The acoustic echo cancellation system (100), (200), (300), or (400) of claim 7 further comprising one or more secondary acoustic echo cancellation cores (302) and (402) that cancel at least a portion of an echo or reverberation within the local side signals while the acoustic echo cancellation core (104) or (302) converges to a cancellation level.

9. The acoustic echo cancellation system (100), (200), (300), or (400) of claim 8 where at least one of the one or more secondary acoustic echo cancellation cores comprises a half-duplex core (402), or where at least one of the one or more secondary acoustic echo cancellation cores comprises an echo suppressor and an echo canceller.

10. A non-transitory computer readable medium including a program code for removing echo and reverberation from local side signals in a mobile communication device comprising:
program code that enables a filtering and delaying of remote side signals to correlate to local side signals;
program code that continuously generates an estimate of a delay between the remote side signals and the local side signals when a substantial difference in coherence is detected;
program code that renders a confidence level associated with the continuously generated estimates of the delay, where the confidence level associated with an estimate of a delay indicates a degree of stability of that estimate, and where the confidence level comprises a correlation measurement, a discrete value, or a temporal heuristic; and
program code that when the confidence level exceeds a predetermined value, substantially cancels a portion of the echo or reverberation within the local side signals based on the estimate of the delay associated with the confidence level that exceeds the predetermined value, the confidence level, and the remote side signals.

11. The non-transitory computer readable medium of claim 10 further comprising program code that that automatically identifies and records in a memory coherence differences between the remote side signals and the local side signals when the remote side signals and the local side signals lack a spectral coherence, or further comprising program code that delays the program code that substantially cancels the portion of the echo or reverberation within the local side signals while an acoustic space, a local side speaker, and an input device is modeled, or further comprising program code that delays the program code that continuously generates an estimate of a delay between the remote side signals and the local side signals until a cancellation level is attained.

12. The non-transitory computer readable medium of claim 11 where the coherence differences is identified in real-time.

13. A method of removing echo and reverberation from local side signals in a communication device comprising:
filtering and delaying (502) and (504) remote side signals to correlate the remote side signals to local side signals;
generating an estimate of a delay (510) between the remote side signals and the local side signals continuously when coherence differences between the remote side signals and the local side signals are detected;
rendering a confidence level (510) and (512) associated with the continuously generated estimates of the delay, where the confidence level associated with an estimate of a delay indicates a degree of stability of that estimate, and where the confidence level comprises a correlation measurement, a discrete value, or a temporal heuristic; and
canceling, when the confidence level exceeds a predetermined value, a portion of the echo or reverberation (522) within the local side signals based on the estimate of the delay confidence level that exceeds the predetermined value.

14. The method of claim 13, where the cancelling of the portion of the echo and reverberation (522) is based on a heuristic and the remote side signal, and preferably where the act of cancelling a portion of the echo or reverberation (522) occurs through a plurality of separate and different acoustical echo cancellers, or where the cancelling of the portion of the echo and reverberation (522) is based on a convergence level and a period of time.

## Patentansprüche

1. Ein akustisches Echounterdrückungssystem (100), (200), (300) oder (400), das aufweist:
einen Puffer (102), der Signale einer entfernten Seite in einen oder mehrere Speicherbereich(e) schreibt;
eine Verzögerungssteuervorrichtung (112), die die Signale der entfernten Seite filtert und verzögert, um die Signale der entfernten Seite mit Signalen einer lokalen Seite zu korrelieren;
einen akustischen Echounterdrückungskern (104) oder (302), der die Signale der entfernten Seite aus dem Puffer (102) durch die Verzögerungssteuervorrichtung (112) zieht; und
eine Verzögerungsschätzeinrichtung (118), die kontinuierlich eine Schätzung einer Verzögerung zwischen den gespeicherten Signalen der entfernten Seite und den Signalen der lokalen Seite erzeugt und ausgebildet ist zum Darstellen eines Konfidenzniveaus, das mit den kontinuierlich erzeugten Schätzungen assoziiert ist, wobei das Konfidenzniveau, das mit einer Schätzung einer Verzögerung assoziiert ist,
einen Grad an Stabilität dieser Schätzung angibt, wobei die Verzögerungsschätzeinrichtung (118) kontinuierlich die Schätzungen erzeugt und das assoziierte Konfidenzniveau darstellt, bis das dargestellte Konfidenzniveau einen vorgegebenen Wert übersteigt, und wobei das Konfidenzniveau eine Korrelationsmessung, einen diskreten Wert oder eine zeitliche Heuristik aufweist;
wobei, wenn das Konfidenzniveau einen vorgegebenen Wert übersteigt, der akustische Echounterdrückungskern (104) oder (302) im Wesentlichen einen Teil eines Echos oder Widerhalls in den Signalen der lokalen Seite basierend auf der Schätzung der Verzögerung unterdrückt, die mit dem dargestellten Konfidenzniveau assoziiert ist, das das vorgegebene Niveau übersteigt.

2. Das akustische Echounterdrückungssystem (100), (200), (300) oder (400) gemäß Anspruch 1, das weiter einen Verzögerungsdetektor (116) aufweist, der automatisch Differenzen zwischen den Signalen der entfernten Seite und den Signalen der lokalen Seite identifiziert und in einem Speichersignal aufzeichnet.

3. Das akustische Echounterdrückungssystem (100), (200), (300) oder (400) gemäß Anspruch 2, wobei der Verzögerungsdetektor (116) Kohärenzdifferenzen in Echtzeit identifiziert oder wobei die Verzögerungsschätzeinrichtung (118) durch den Verzögerungsdetektor (116) aktiviert wird.

4. Das akustische Echounterdrückungssystem (100), (200), (300) oder (400) gemäß Anspruch 2, wobei der akustische Echounterdrückungskern (104) oder (302) die Signaldifferenzen zwischen den Signalen der entfernten Seite und den Signalen der lokalen Seite identifiziert und aufzeichnet, wenn den Signalen der entfernten Seite und den Signalen der lokalen Seite eine spektrale Kohärenz fehlt, um eine Fehlertoleranz vorzusehen.

5. Das akustische Echounterdrückungssystem (100), (200), (300) oder (400) gemäß Anspruch 2, das weiter aufweist:
Bypass-Komponenten (204) und (206) oder (204) und (302) oder (204) und (402), die ermöglichen, dass die Signale der lokalen Seite den akustischen Echounterdrückungskern (104) oder (302) umgehen, während der akustische Echounterdrückungskern (104) oder (302) einen akustischen Raum, einen Lautsprecher der lokalen Seite und eine Eingabevorrichtung modelliert; und
wobei die Verzögerungssteuervorrichtung (112) den Verzögerungsdetektor (116) zurücksetzt, bis der akustische Echounterdrückungskern (104) oder (302) den akustischen Raum, den Lautsprecher der lokalen Seite und die Eingabevorrichtung modelliert, oder weiter aufweist:
Bypass-Komponenten (204) und (206) oder (204) und (302) oder (204) und (402), die ermöglichen, dass die Signale der lokalen Seite den akustischen Echounterdrückungskern (104) oder (302) umgehen, während der akustische Echounterdrückungskern 104 oder 302 auf ein Unterdrückungsniveau konvergiert; und
wobei die Verzögerungssteuervorrichtung (112) den Verzögerungsdetektor (116) zurücksetzt, bis der akustische Echounterdrückungskern (104) oder (302) auf ein Unterdrückungsniveau konvergiert.

6. Das akustische Echounterdrückungssystem (100), (200), (300) oder (400) gemäß Anspruch 1, das weiter Bypass-Komponenten (204) und (206) aufweist, die ermöglichen, dass die Signale der lokalen Seite den akustischen Echounterdrückungskern (104) oder (302) umgehen, während der akustische Echounterdrückungskern (104) oder (302) einen akustischen Raum, einen Lautsprecher der lokalen Seite und eine Eingabevorrichtung modelliert.

7. Das akustische Echounterdrückungssystem (100), (200), (300) oder (400) gemäß Anspruch 1, wobei die Verzögerungsschätzeinrichtung (118) gesamte gepufferte Signale der entfernten Seite mit unveränderten Signale der lokalen Seite in einer Zeitdomäne vergleicht oder wobei die Verzögerungsschätzeinrichtung (118) konfiguriert ist, in einem ausgesperrten Zustand zu bleiben, bis der akustische Echounterdrückungskern (104) oder (302) einen akustischen Raum, einen Lautsprecher der lokalen Seite und eine Eingabevorrichtung modelliert, oder wobei die Verzögerungsschätzeinrichtung (118) konfiguriert ist, in einem ausgesperrten Zustand für eine vorgegebene Zeitdauer zu bleiben, während der akustische Echounterdrückungskern (104) oder (302) einen akustischen Raum, einen Lautsprecher der lokalen Seite und eine Eingabevorrichtung modelliert.

8. Das akustische Echounterdrückungssystem (100), (200), (300) oder (400) gemäß Anspruch 7, das weiter einen oder mehrere sekundäre akustische Echounterdrückungskern(e) (302) und (402) aufweist, der/die zumindest einen Teil eines Echos oder Widerhalls in den Signalen der lokalen Seite unterdrückt/unterdrücken, während der akustische Echounterdrückungskern (104) oder (302) auf ein Unterdrückungsniveau konvergiert.

9. Das akustische Echounterdrückungssystem (100), (200), (300) oder (400) gemäß Anspruch 8, wobei zumindest einer des einen oder der mehreren sekundären akustischen Echounterdrückungskerne einen Halbduplex-Kern (402) aufweist, oder wobei zumindest einer des einen oder der mehreren sekundären akustischen Echounterdrückungskerne einen Echounterdrücker und einen Echokompensator aufweist.

10. Ein nicht-transitorisches computerlesbares Medium mit einem Programmcode zum Entfernen von Echo und Widerhall aus Signalen der lokalen Seite in einer mobilen Kommunikationsvorrichtung, das aufweist:
Programmcode, der ein Filtern und Verzögern von Signalen der entfernten Seite ermöglicht, um mit Signalen der lokalen Seite zu korrelieren;
Programmcode, der kontinuierlich eine Schätzung einer Verzögerung zwischen den Signalen der entfernten Seite und den Signalen der lokalen Seite erzeugt, wenn eine wesentliche Differenz der Kohärenz erfasst wird;
Programmcode, der ein Konfidenzniveau darstellt, das mit den kontinuierlich erzeugten Schätzungen der Verzögerung assoziiert ist, wobei das Konfidenzniveau, das mit einer Schätzung einer Verzögerung assoziiert ist, einen Grad an Stabilität dieser Schätzung angibt, und wobei das Konfidenzniveau eine Korrelationsmessung, einen diskreten Wert oder eine zeitliche Heuristik aufweist; und
Programmcode, der, wenn das Konfidenzniveau einen vorgegebenen Wert übersteigt, im Wesentlichen einen Teil des Echos oder Widerhalls in den Signalen der lokalen Seite basierend auf der Schätzung der Verzögerung, die mit dem Konfidenzniveau assoziiert ist, das den vorgegebenen Wert übersteigt, dem Konfidenzniveau und den Signalen der entfernten Seite unterdrückt.

11. Das nicht-transitorische computerlesbare Medium gemäß Anspruch 10, das weiter Programmcode aufweist, der automatisch Kohärenzdifferenzen zwischen den Signalen der entfernten Seite und den Signalen der lokalen Seite identifiziert und in einem Speicher aufzeichnet, wenn den Signalen der entfernten Seite und den Signalen der lokalen Seite eine spektrale Kohärenz fehlt, oder weiter Programmcode aufweist, der den Programmcode verzögert, der im Wesentlichen den Teil des Echos oder Widerhalls in den Signalen der lokalen Seite unterdrückt, während ein akustischer Raum, ein Lautsprecher der lokalen Seite und eine Eingabevorrichtung modelliert werden, oder weiter Programmcode aufweist, der den Programmcode verzögert, der kontinuierlich eine Schätzung einer Verzögerung zwischen den Signalen der entfernten Seite und den Signalen der lokalen Seite erzeugt, bis ein Unterdrückungsniveau erreicht ist.

12. Das nicht-transitorische computerlesbare Medium gemäß Anspruch 11, wobei die Kohärenzdifferenzen in Echtzeit identifiziert werden.

13. Ein Verfahren zum Entfernen von Echo und Widerhall aus Signalen der lokalen Seite in einer Kommunikationsvorrichtung, das aufweist:
Filtern und Verzögern (502) und (504) von Signalen der entfernten Seite, um die Signale der entfernten Seite mit Signalen der lokalen Seite zu korrelieren;
kontinuierliches Erzeugen einer Schätzung einer Verzögerung (510) zwischen den Signalen der entfernten Seite und den Signalen der lokalen Seite, wenn Kohärenzdifferenzen zwischen den Signalen der entfernten Seite und den Signalen der lokalen Seite erfasst werden;
Darstellen eines Konfidenzniveaus (510) und (512), das mit den kontinuierlich erzeugten Schätzungen der Verzögerung assoziiert ist, wobei das Konfidenzniveau, das mit einer Schätzung einer Verzögerung assoziiert ist, einen Grad an Stabilität dieser Schätzung angibt, und wobei das Konfidenzniveau eine Korrelationsmessung, einen diskreten Wert oder eine zeitliche Heuristik aufweist; und
Unterdrücken, wenn das Konfidenzniveau einen vorgegebenen Wert übersteigt, eines Teils des Echos oder Widerhalls (522) in den Signalen der lokalen Seite basierend auf der Schätzung der Verzögerung des Konfidenzniveaus, das den vorgegebenen Wert übersteigt.

14. Das Verfahren gemäß Anspruch 13, wobei das Unterdrücken des Teils des Echos und Widerhalls (522) auf einer Heuristik und dem Signal der entfernten Seite basiert, und vorzugsweise, wobei der Vorgang eines Unterdrückens eines Teils des Echos oder Widerhalls (522) durch eine Vielzahl von getrennten und verschiedenen akustischen Echounterdrückern stattfindet, oder wobei das Unterdrücken des Teils des Echos und Widerhalls (522) auf einem Konvergenzniveau und einer Zeitdauer basiert.

## Revendications

1. Système d'annulation d'écho acoustique (100), (200), (300) ou (400) comprenant :
un tampon (102) qui écrit des signaux côté distant à une ou plusieurs zones de stockage ;
une unité de commande de retard (112) qui filtre et retarde les signaux côté distant pour corréler les signaux côté distant avec les signaux côté local ;
un noyau d'annulation d'écho acoustique (104) ou (302) qui extrait les signaux côté distant à partir du tampon (102) par l'intermédiaire de l'unité de commande de retard (112) ; et
un estimateur de retard (118) qui génère de manière continue une estimation d'un retard entre les signaux côté distant stockés et les signaux côté local et conçu pour restituer un niveau de confiance associé aux estimations générées de manière continue, où le niveau de confiance associé à une estimation d'un retard indique un degré de stabilité de cette estimation, où l'estimateur de retard (118) génère de manière continue les estimations et restitue le niveau de confiance associé jusqu'à ce que le niveau de confiance restitué dépasse une valeur prédéterminée, et où le niveau de confiance comprend une mesure de corrélation, une valeur discrète, ou une heuristique temporelle ;
où, lorsque le niveau de confiance dépasse une valeur prédéterminée, le noyau d'annulation d'écho acoustique (104) ou (302) annule substantiellement une partie d'un écho ou d'une réverbération dans les signaux côté local sur la base de l'estimation du retard associé au niveau de confiance restitué qui dépasse le niveau prédéterminé.

2. Système d'annulation d'écho acoustique (100), (200), (300) ou (400) de la revendication 1, comprenant en outre un détecteur de retard (116) qui identifie et enregistre automatiquement dans une mémoire des différences de signaux entre les signaux côté distant et les signaux côté local.

3. Système d'annulation d'écho acoustique (100), (200), (300) ou (400) de la revendication 2, où le détecteur de retard (116) identifie des différences de cohérence en temps réel, ou où l'estimateur de retard (118) est activé par le détecteur de retard (116).

4. Système d'annulation d'écho acoustique (100), (200), (300) ou (400) de la revendication 2, où le noyau d'annulation d'écho acoustique (104) ou (302) identifie et enregistre les différences de signaux entre les signaux côté distant et les signaux côté local lorsque les signaux côté distant et les signaux côté local manquent de cohérence spectrale pour fournir une tolérance aux pannes.

5. Système d'annulation d'écho acoustique (100), (200), (300) ou (400) de la revendication 2, comprenant en outre :
des composants de dérivation (204) et (206) ou (204) et (302) ou (204) et (402) qui permettent aux signaux côté local de contourner le noyau d'annulation d'écho acoustique (104) ou (302), lorsque le noyau d'annulation d'écho acoustique (104) ou (302) modélise un espace acoustique, un haut-parleur côté local, et un dispositif d'entrée ; et
où l'unité de commande de retard (112) réinitialise le détecteur de retard (116) jusqu'à ce que le noyau d'annulation d'écho acoustique (104) ou (302) modélise l'espace acoustique, le haut-parleur côté local, et le dispositif d'entrée, ou comprenant en outre :
des composants de dérivation (204) et (206) ou (204) et (302) ou (204) et (402) qui permettent aux signaux côté local de contourner le noyau d'annulation d'écho acoustique (104) ou (302), lorsque le noyau d'annulation d'écho acoustique (104) ou (302) converge vers un niveau d'annulation ; et
où l'unité de commande de retard (112) réinitialise le détecteur de retard (116) jusqu'à ce que le noyau d'annulation d'écho acoustique (104) ou (302) converge vers un niveau d'annulation.

6. Système d'annulation d'écho acoustique (100), (200), (300) ou (400) de la revendication 1, comprenant en outre des composants de dérivation (204) et (206) qui permettent aux signaux côté local de contourner le noyau d'annulation d'écho acoustique (104) ou (302) lorsque le noyau d'annulation d'écho acoustique (104) ou (302) modélise un espace acoustique, un haut-parleur côté local, et un dispositif d'entrée.

7. Système d'annulation d'écho acoustique (100), (200), (300) ou (400) de la revendication 1, où l'estimateur de retard (118) compare des signaux côté distant complètement tamponnés avec des signaux côté local inchangés dans un domaine temporel, ou où l'estimateur de retard (118) est configuré pour rester dans un état verrouillé jusqu'à ce que le noyau d'annulation d'écho acoustique (104) ou (302) modélise un espace acoustique, un haut-parleur côté local, et un dispositif d'entrée, ou où l'estimateur de retard (118) est configuré pour rester dans un état verrouillé pendant une période prédéterminée lorsque le noyau d'annulation d'écho acoustique (104) ou (302) modélise un espace acoustique, un haut-parleur côté local et un dispositif d'entrée.

8. Système d'annulation d'écho acoustique (100), (200), (300) ou (400) de la revendication 7, comprenant en outre un ou plusieurs noyaux secondaires d'annulation d'écho acoustique (302) et (402) qui annulent au moins une partie d'un écho ou d'une réverbération dans les signaux côté local lorsque le noyau d'annulation d'écho acoustique (104) ou (302) converge vers un niveau d'annulation.

9. Système d'annulation d'écho acoustique (100), (200), (300) ou (400) de la revendication 8, où au moins l'un des un ou plusieurs noyaux secondaires d'annulation d'écho acoustique comprend un noyau semi-duplex (402), ou où au moins l'un des un ou plusieurs noyaux secondaires d'annulation d'écho acoustique comprend un suppresseur d'écho et un annuleur d'écho.

10. Support lisible par ordinateur non-transitoire comportant un code de programme pour la suppression d'écho et de réverbération à partir de signaux côté local dans un dispositif de communication mobile comprenant :
un code de programme qui permet un filtrage et un retardement de signaux côté distant pour être en corrélation avec des signaux côté local ;
un code de programme qui génère de manière continue une estimation d'un retard entre les signaux côté distant et les signaux côté local lorsqu'une différence substantielle de cohérence est détectée ;
un code de programme qui restitue un niveau de confiance associé aux estimations générées de manière continue du retard, où le niveau de confiance associé à une estimation d'un retard indique un degré de stabilité de cette estimation, et où le niveau de confiance comprend une mesure de corrélation, une valeur discrète, ou une heuristique temporelle ; et
un code de programme qui, lorsque le niveau de confiance dépasse une valeur prédéterminée, annule sensiblement une partie de l'écho ou de la réverbération dans les signaux côté local sur la base de l'estimation du retard associé au niveau de confiance qui dépasse la valeur prédéterminée, le niveau de confiance, et les signaux de côté distant.

11. Support lisible par ordinateur non-transitoire de la revendication 10, comprenant en outre un code de programme qui identifie et enregistre automatiquement dans une mémoire des différences de cohérence entre les signaux côté distant et les signaux côté local lorsque les signaux côté distant et les signaux côté local manquent de cohérence spectrale, ou comprenant en outre un code de programme qui retarde le code de programme qui annule sensiblement la partie de l'écho ou de la réverbération dans les signaux côté local lorsqu'un espace sonore, un haut-parleur côté local, et un dispositif d'entrée est modélisé, ou comprenant en outre un code de programme qui retarde le code de programme qui génère de manière continue une estimation d'un retard entre les signaux côté distant et les signaux côté local jusqu'à ce qu'un niveau d'annulation soit atteint.

12. Support lisible par ordinateur non-transitoire de la revendication 11, où les différences de cohérence sont identifiées en temps réel.

13. Procédé d'élimination d'écho et de réverbération à partir de signaux côté local dans un dispositif de communication comprenant le fait :
de filtrer et de retarder (502) et (504) des signaux côté distant pour corréler les signaux côté distant avec les signaux côté local ;
de générer une estimation d'un retard (510) entre les signaux côté distant et les signaux côté local de manière continue lorsque des différences de cohérence entre les signaux côté distant et les signaux côté local sont détectées ;
de restituer un niveau de confiance (510) et (512) associé aux estimations générées de manière continue du retard, où le niveau de confiance associé à une estimation d'un retard indique un degré de stabilité de cette estimation, et où le niveau de confiance comprend une mesure de corrélation, une valeur discrète, ou une heuristique temporelle ; et
d'annuler, lorsque le niveau de confiance dépasse une valeur prédéterminée, une partie de l'écho ou de la réverbération (522) dans les signaux côté local sur la base de l'estimation du niveau de confiance de retard qui dépasse la valeur prédéterminée.

14. Procédé de la revendication 13, où l'annulation de la partie de l'écho et de la réverbération (522) est basée sur une heuristique et le signal côté distant, et où de préférence le fait d'annuler une partie de l'écho ou de la réverbération (522) se produit par l'intermédiaire d'une pluralité d'annuleurs d'écho acoustique distincts et différents, ou où l'annulation de la partie de l'écho et de la réverbération (522) est basée sur un niveau de convergence et une période de temps.
